# FASCICULE DE BREVET EUROPEEN

(11) **EP 0 788 859 B1**
(45) Date de publication et mention de la délivrance du brevet: **14.11.2001**
(21) Numéro de dépôt: 97100755.4
(22) Date de dépôt: 18.01.1997
(51) Int. Cl.: B23D 57/00, B28D 5/04, B24B 5/36

(54) **Dispositif de sciage par fil**
Drahtsägevorrichtung
Wire sawing device

(30) Priorité: 06.02.1996 CH 30196
(43) Date de publication de la demande: 13.08.1997
(73) Titulaire: HCT Shaping Systems SA, 1033 Cheseaux (CH)
(72) Inventeur: Hauser, Charles, Genolier (CH)
(74) Mandataire: Micheli & Cie

(56) Documents cités:
- EP-A- 0 027 245
- EP-A- 0 712 677
- DE-A- 3 829 648
- DE-A- 4 409 060
- PATENT ABSTRACTS OF JAPAN vol. 14, no. 26 (M-291) [3969] , 18 Janvier 1990 & JP 01 264764 A (SUMITOMO METAL IND LTD), 23 Octobre 1989,

## Description

La présente invention concerne un dispositif de sciage par fil comprenant une nappe de fils tendue entre au moins deux cylindres guide-fils et maintenue en position par des gorges sur la surface desdits cylindres guide-fils qui définissent l'intervalle entre les fils de ladite nappe et susceptible de se déplacer selon un mouvement alternatif ou continu en appui contre une pièce à scier fixée sur une table support. Un tel dispositif est connu du document WO 91/12915.

On connaît des dispositifs de sciage de ce type comprenant entre autre une nappe de fils susceptible de se déplacer selon un mouvement continu ou alternatif en appui contre une pièce à scier définissant ainsi une zone de sciage. La zone de sciage est constituée d'un ensemble de cylindres placés parallèlement. Ces cylindres, appelés guide-fils, sont gravés avec des gorges définissant l'intervalle entre les fils de la nappe, soit l'épaisseur des tranches sciées. La pièce à scier est fixée sur une table support qui se déplace perpendiculairement à la nappe de fils. La vitesse de déplacement définit la vitesse de coupe. Le renouvellement du fil ainsi que le contrôle de sa tension se fait dans une partie appelée zone de gestion du fil située en dehors de la zone de sciage proprement dite. L'agent qui régira la découpe est soit un abrasif fixé sur le fil, soit un abrasif libre amené sous forme de barbotine. Le fil n'agit que comme transporteur.

Lors de la découpe en tranches fines de la pièce à scier, le fil tendu est à la fois guidé et tracté par les cylindres guide-fils. Ces cylindres généralement revêtus d'une couche synthétique sont taillés avec des gorges dont la géométrie et les dimensions doivent être d'une grande précision. Le procédé de découpe qui utilise un abrasif soit fixe, soit libre entraîne nécessairement une usure du matériau qui constitue la surface des cylindres guide-fils, donc modifie les dimensions et la géométrie desdites gorges. Ces cylindres guide-fils constituent des éléments d'usure principaux. Ceux-ci ont donc une durée de vie limitée et les gorges se trouvant à leur surface doivent être périodiquement retaillées soit par rectification, soit par tournage. Cette opération se fait en dehors du dispositif de sciage sur une rectifieuse cylindrique ou un tour à commande numérique par exemple. Le nombre de retaillages dépend de l'importance de chaque taillage, de la géométrie des gorges et de l'épaisseur initiale du revêtement. Lorsque le revêtement est complètement utilisé, on procède à la pose d'un nouveau revêtement par moulage, injection ou toute méthode qui s'avère adéquate pour le revêtement choisi. Lorsqu'un retaillage s'avère nécessaire, les cylindres guide-fils doivent être démontés et sortis du dispositif de sciage. Cette opération est généralement lourde en raison de la complexité mécanique des cylindres guide-fils et de leur système d'entraînement. De plus, cela nécessite l'assistance de manutention extérieure. On aura donc un arrêt du dispositif de sciage important qui diminuera la productivité globale de l'ensemble. Lors du changement de l'épaisseur des tranches à scier un changement du pas des gorges taillées sur la surface des guide-fils est obligatoire et nécessite également le changement des cylindres guide-fils pas très pratique et peu souhaité.

La précision des tranches, très importante pour des applications électroniques, dépend de la position des fils au cours du sciage ainsi que des éléments de support de la pièce à scier, donc de la position des cylindres guide-fils par rapport à la pièce à scier mais aussi de la qualité de la géométrie des gorges taillées à la surface des guide-fils. Une usure de celles-ci provoque une dégradation de la précision des tranches obtenues. Il est clair que l'arrêt du dispositif de sciage pour le réusinage des gorges ne se fait qu'en toute nécessité; on a donc tendance à repousser celui-ci jusqu'à la dernière extrémité, entraînant par ce fait une baisse de la qualité moyenne des tranches ainsi obtenues.

Les exigences de productivité et de précision des applications à usage semi-conducteur, liées aux dimensions grandissantes des pièces à scier donc des tranches, nécessitent que même des petites variations doivent être évitées. Le retaillage des gorges en dehors du dispositif de sciage par les difficultés qu'il provoque va à l'encontre des exigences ci-dessus, de plus il nécessite des investissements supplémentaires puisqu'il est nécessaire d'avoir plusieurs jeux de cylindres guide-fils, pièces onéreuses en soit de part leur complexité et leur précision.

Le but de la présente invention consiste donc à remédier aux inconvénients précités et l'invention est caractérisée à cet effet par le fait que le dispositif de sciage comprend un mécanisme de taillage des gorges sur la surface des cylindres guide-fils permettant le taillage in situ des gorges sans démontage des cylindres guide-fils.

Ces caractéristiques utilisant le concept de taillage in situ permettent de réaliser un dispositif de sciage performant ayant une productivité élevée, une précision moyenne accrue et rendant aisées des modifications de l'épaisseur de tranches produites.

Le concept de taillage in situ permet donc de répondre aux nouvelles exigences de la technologie en supprimant une opération longue et fastidieuse tout en améliorant la qualité des performances tant géométriques que de productivité.

Le réusinage après usure ou le changement du pas des gorges pour la modification de l'épaisseur des tranches est ainsi rendue possible. Le démontage ne devient nécessaire que lors de l'opération de remplacement du revêtement. Le mécanisme de taillage in situ peut être intégré dans la structure du dispositif de sciage ou rapporté et/ou éventuellement amovible.

Cette technique de sciage qui requiert un contrôle parfait de la position des gorges taillées sur la surface des cylindres guide-fils verra la précision de la position de celles-ci augmentée par le fait que le taillage in situ évite le transfert des cylindres guide-fils d'une machine de taillage extérieure sur le dispositif de sciage et donc le cumul de tolérances de positionnement indésirable.

Le mécanisme de taillage in situ se présentera donc sous la forme d'un outil de taillage qui peut aussi bien être une meule qu'un outil coupant tel qu'un burin monté sur un chariot porte-outil et pouvant se déplacer selon un ou deux axes indépendants. Ces déplacements motorisés sont contrôlés en amplitude par une commande numérique, indépendante ou associée à celle du dispositif de sciage. La programmation de celle-ci va dépendre de la géométrie des gorges. On peut également utiliser le mouvement de la table support de la pièce à scier comme l'un des axes du mécanisme de taillage. Comme le dispositif de sciage comporte plusieurs cylindres guide-fils, chaque guide-fils peut avoir son propre mécanisme de taillage in situ. Le système peut aussi être unique mais déplaçable d'un cylindre guide-fils à un autre.

D'autres avantages ressortent des caractéristiques exprimées dans les revendications dépendantes et de la description exposant ci-après l'invention plus en détail à l'aide de dessins qui représentent schématiquement et à titre d'exemple deux modes d'exécution.

La figure 1 est une vue en perspective illustrant un premier mode d'exécution.

La figure 2 est une vue agrandie d'une partie de la figure 1.

La figure 3 représente un deuxième mode d'exécution.

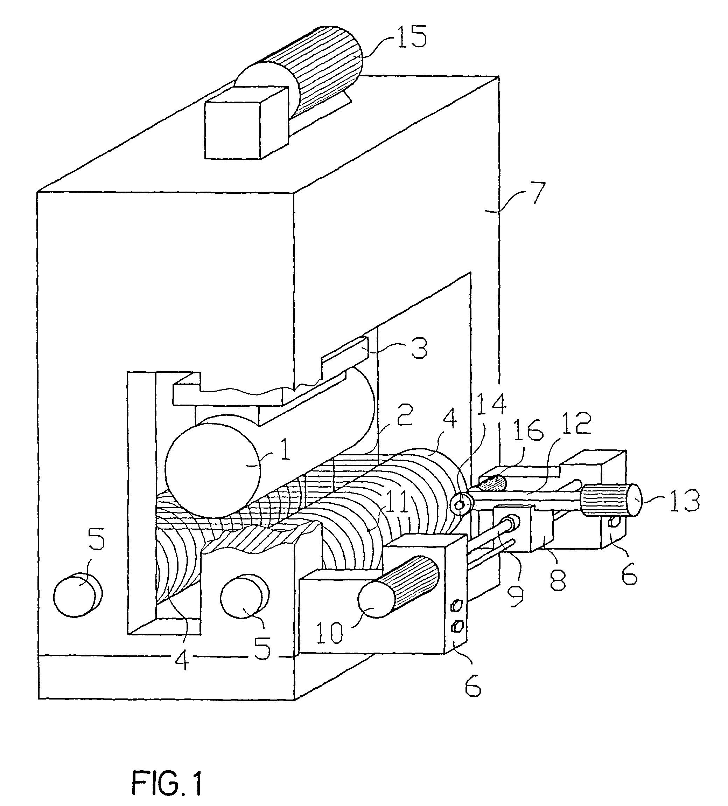

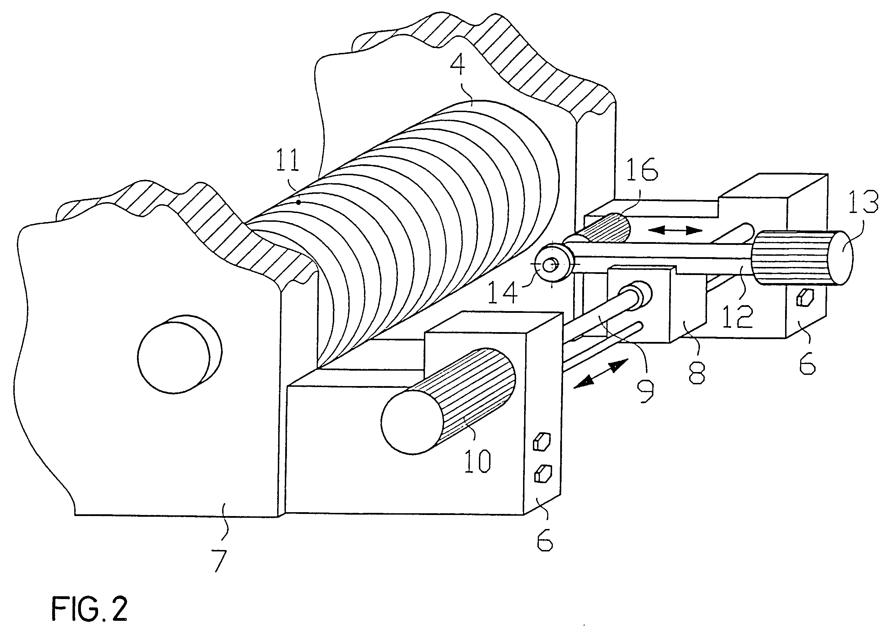

En référence aux figures 1 et 2, une pièce à scier 1 est mise en appui contre une nappe de fils 2 supportée par des cylindres guide-fils 4. Une table-support 3 sur laquelle est fixée la pièce à scier 1 est mue par un moteur 15. Les cylindres guide-fils 4 sont supportés à leurs extrémités par des paliers 5. Un mécanisme de taillage amovible est composé de deux supports 6 fixés contre un bâti 7 du dispositif de sciage, d'un chariot 8 se déplaçant parallèlement aux cylindres guide-fils 4 sur un axe de guidage 9 avec un moteur d'avance 10 donnant le pas entre les gorges 11, d'un organe de translation comprenant un deuxième axe de déplacement 12 donnant la profondeur des gorges 11 actionné par un moteur 13 et d'un outil de taillage sous forme d'une meule 14 située à l'extrémité de ce deuxième axe 12 entraîné par le moteur 16.

La nappe de fils 2 est tendue entre les deux cylindres guide-fils 4 et maintenue en position par les gorges 11 taillées sur la surface des cylindres 4 pour définir précisément l'intervalle entre les fils de la nappe et donc l'épaisseur des plaquettes sciées.

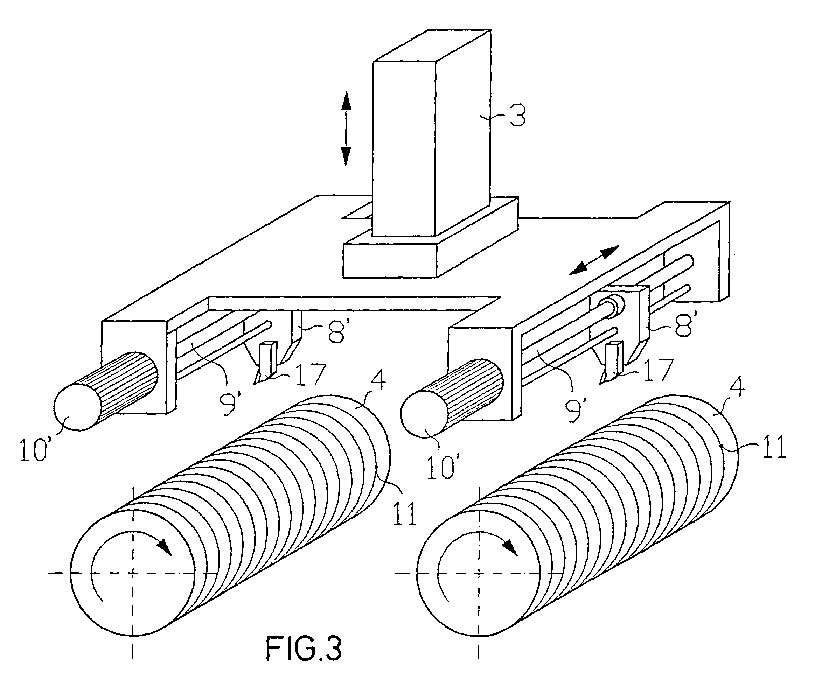

Le second mode d'exécution illustré à la figure 3 comprend un mécanisme de taillage fixé sur la table support 3. Cette dernière est donc utilisée comme organe de translation et deuxième axe de déplacement donnant la profondeur des gorges 11 sur la périphérie des cylindres guide-fils 4. Le mécanisme représenté permet le taillage des gorges 11 sur deux cylindres guide-fils 4 à la fois. Chaque côté est composé d'un chariot 8 se déplaçant parallèlement aux cylindres guide-fils 4 sur un axe de guidage 9 avec un moteur d'avance 10 donnant le pas entre les gorges 11. L'outil, dans ce cas un burin 17, est situé sur le chariot 8 et la profondeur des gorges 11 est donnée par le mouvement vertical de la table support de lingot 3. La vitesse de coupe est déterminée par la vitesse de rotation des cylindres guide-fils 4.

Le fil de sciage formant la nappe de fils 2 entre les cylindres guide-fils 4 est constitué d'acier à ressort d'un diamètre compris entre 0,1 et 0,2 mm afin de scier des blocs de matériaux durs ou exotiques (tels que silicium, céramique, composés du groupe III-V, Grenat Gadolinium Gallium, saphir, etc) en tranches de 0,1 à 5 mm d'épaisseur environ. L'agent abrasif est un produit du commerce et peut être du diamant, du carbure de silicium, de l'alumine etc et sous forme fixée au fil ou sous forme libre en barbotine.

Le dispositif de sciage permet par son concept de taillage in situ des gorges 11 sur la surface des cylindres guide-fils 4, d'obtenir un maximum de performances, de productivité ou de flexibilité, sans que cela soit au détriment de la qualité des tranches produites.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, d'autres types de systèmes de taillage in situ peuvent être envisagés qui par leur mode d'usinage ont également la fonction de taillage sans démontage des cylindres guide-fils 4.

Le mécanisme de taillage pourra être intégré dans la structure du dispositif de sciage ou être amovible. Dans ce dernier cas, le mécanisme de taillage pourrait être monté sur un véhicule de transport et desservir par exemple plusieurs dispositifs de sciage.

Des outils de taillage de tous types pourront être adaptés, tels que des dispositifs abrasifs, des outils coupants.

Un mode de taillage sans enlèvement de matière, par roulage par exemple, peut également satisfaire au taillage in situ et à l'objet de la présente invention.

Le mécanisme de taillage pourrait également utiliser pour la formation des gorges 11 les principes de l'usinage par laser, par jet de liquide, par exemple jet d'eau, par électroérosion ou encore par gravage acide.

Le mécanisme de taillage entier ou au moins une partie de celui-ci comprenant le ou les outils de taillage pourrait être agencé dans une position intermédiaire entre les guide-fils 4 de façon que le taillage s'effectue sur un secteur des cylindres guide-fils non recouvert par la nappe de fils. On pourrait ainsi procéder au retaillage des gorges sans pour autant ôter les fils des cylindres 4. Ces derniers pourront être au nombre de 2,3,4, voire davantage.

## Revendications

1. Dispositif de sciage par fil comprenant une nappe de fils (2) tendue entre au moins deux cylindres guide-fils (4) et maintenue en position par des gorges (11) sur la surface desdits cylindres guide-fils (4) qui définissent l'intervalle entre les fils de ladite nappe (2) et susceptible de se déplacer selon un mouvement alternatif ou continu en appui contre une pièce à scier (1) fixée sur une table support (3), **caractérisé en ce que** celui-ci comprend un mécanisme de taillage des gorges (11) sur la surface des cylindres guide-fils (4) permettant le taillage in situ des gorges (11) sans démontage des cylindres guide-fils (4).

2. Dispositif selon la revendication 1, **caractérisé en ce que** le mécanisme de taillage est intégré dans la structure du dispositif de sciage.

3. Dispositif selon les revendications 1 ou 2, **caractérisé en ce que** le mécanisme de taillage est amovible.

4. Dispositif selon l'une des revendications 1 à 3, **caractérisé en ce que** le mécanisme de taillage est amovible et fixé sur un véhicule de transport.

5. Dispositif selon l'une des revendications précédentes, **caractérisé en ce que** le mécanisme de taillage comprend au moins un support (6), au moins un chariot (8) destiné à se déplacer parallèlement aux cylindres guide-fils (4) sur un axe de guidage (9) et portant au moins un outil de taillage (14,17) susceptible d'être sollicité contre au moins un cylindre guide-fils (4) grâce à un organe de translation (13,3).

6. Dispositif selon l'une des revendications précédentes, **caractérisé en ce que** le mécanisme de taillage est équipé d'un disque abrasif (14) comme outil de taillage.

7. Dispositif selon l'une des revendications précédentes, **caractérisé en ce que** le mécanisme de taillage est équipé avec un outil coupant (17) et la vitesse de coupe donnée par la rotation des cylindres guide-fils (4).

8. Dispositif selon l'une des revendications précédentes, **caractérisé en ce que** le mécanisme de taillage utilise en tant qu'organe de translation la table support (3) pour solliciter l'outil de taillage contre au moins un cylindre guide-fils (4).

9. Dispositif selon l'une des revendications précédentes, **caractérisé en ce que** le mécanisme de taillage utilise le principe du roulage pour la formation des gorges (11).

10. Dispositif selon l'une des revendications 1 à 8, **caractérisé en ce que** le mécanisme de taillage utilise, pour la formation des gorges (11), les principes de l'usinage par laser, par jet de liquide, par électroérosion ou par gravage acide.

11. Dispositif selon l'une des revendications précédentes, **caractérisé en ce qu'**au moins une partie du mécanisme de taillage comprenant le ou les outils de taillage (14,17) est agencée dans une position intermédiaire entre les cylindres guide-fils (4) de façon que le taillage s'effectue sur un secteur des cylindres guide-fils (4) non recouvert par la nappe de fils (2).

## Patentansprüche

1. Drahtsägevorrichtung, eine Schicht aus Drähten (2) aufweisend, die zwischen zumindest zwei drahtführenden Zylindern (4) gespannt ist und von Rillen (11) auf der Oberfläche benannter drahtführender Zylinder (4), die das Intervall zwischen den Drähten der benannten Schicht (2) definieren, in Position gehalten wird und geeignet ist, sich gemäß einer alternierenden oder kontinuierlichen Bewegung aufdrückend auf ein zu sägendes Stück (1), das auf einem Haltetisch (3) befestigt ist, zu verschieben, **dadurch gekennzeichnet, daß** letzterer einen Mechanismus zum Schneiden der Rillen (11) auf der Oberfläche der drahtführenden Zylinder (4) aufweist, der in situ das Schneiden der Rillen (11) ohne Abmontieren der drahtführenden Zylinder (4) erlaubt.

2. Vorrichtung gemäß Anspruch 1, **dadurch gekennzeichnet, daß** der Schneidemechanismus in die Struktur der Sägevorrichtung integriert ist.

3. Vorrichtung gemäß Anspruch 1 oder 2, **dadurch gekennzeichnet, daß** der Schneidemechanismus abnehmbar ist.

4. Vorrichtung gemäß einem der Ansprüche 1 bis 3, **dadurch gekennzeichnet, daß** der Schneidemechanismus abnehmbar und auf einem Transportfuhrwerk befestigt ist.

5. Vorrichtung gemäß einem der vorhergehenden Ansprüche, **dadurch gekennzeichnet, daß** der Schneidemechanismus zumindest eine Halterung (6) aufweist, und zumindest einen Wagen (8), der dazu bestimmt ist, sich parallel zu den drahtführenden Zylindern (4) auf einer Führungsschiene (9) zu bewegen, und zumindest ein Schneidewerkzeug (14, 17) trägt, das geeignet ist, mittels einer Translationsvorrichtung (13, 3) gegen zumindest einen drahtführenden Zylinder (4) gedrückt zu werden.

6. Vorrichtung gemäß einem der vorhergehenden Ansprüche, **dadurch gekennzeichnet, daß** der Schneidemechanismus mit einer Schleifscheibe (14) als Schneidewerkzeug ausgerüstet ist.

7. Vorrichtung gemäß einem der vorhergehenden Ansprüche, **dadurch gekennzeichnet, daß** der Schneidemechanismus mit einem schneidendem Werkzeug (17) ausgerüstet ist und die Geschwindigkeit des Schneidens durch die Rotation der drahtführenden Zylinder (4) gegeben ist.

8. Vorrichtung gemäß einem der vorhergehenden Ansprüche, **dadurch gekennzeichnet, daß** der Schneidemechanismus als Translationsvorrichtung den Haltetisch (3) benutzt, um das Schneidewerkzeug gegen zumindest einen drahtführenden Zylinder (4) zu drücken.

9. Vorrichtung gemäß einem der vorhergehenden Ansprüche, **dadurch gekennzeichnet, daß** der Schneidemechanismus das Rollprinzip zum Ausbilden der Rillen (11) benutzt.

10. Vorrichtung gemäß einem der Ansprüche 1 bis 8, **dadurch gekennzeichnet, daß** der Schneidemechanismus, zum Ausbilden der Rillen (11), die Prinzipien der Fertigung mittels Laser, mittels Flüssigkeitsstrahl, mittels Elektroerosion, oder mittels Säuregravur benutzt.

11. Vorrichtung gemäß einem der vorhergehenden Ansprüche, **dadurch gekennzeichnet, daß** zumindest ein Teil des Schneidemechanismus, der das (oder die) Schneidewerkzeug(e) (14, 17) aufweist, in einer mittleren Position zwischen den drahtführenden Zylindern (4) derart gestaltet ist, daß das Schneiden auf einem Sektor der drahtführenden Zylinder (4) ausgeführt wird, der nicht von der Schicht aus Drähten (2) bedeckt ist.

## Claims

1. Wire sawing device comprising a layer of wires (2) stretched between at least two wire guide cylinders (4) and maintained in position by grooves (11) on the surface of said wire guide cylinders (4) which define the interval between the wires of said layer (2) and adapted to be displaced according to an alternating or continuous movement resting on a piece to be sawed (1) fixed on a support table (3), **characterised by** the fact that the latter comprises a mechanism for cutting the grooves (11) on the surface of the wire guide cylinders (4) permitting the in situ cutting of the grooves (11) without dismounting the wire guide cylinders (4).

2. Device according to claim 1, **characterised by** the fact that the cutting mechanism is integrated into the structure of the sawing device.

3. Device according to claim 1 or 2, **characterised by** the fact that the cutting mechanism is removable.

4. Device according to one of the claims 1 to 3, **characterised by** the fact that the cutting mechanism is removable and fixed on a transport vehicle.

5. Device according to one of the preceding claims, **characterised by** the fact that the cutting mechanism comprises at least one support (6), at least one carriage (8) adapted to move parallel to the wire guide cylinders (4) on a guide axle (9) and carrying at least one cutting tool (14, 17) adapted to be urged against at least one wire guide cylinder (4) by a translation member (13, 3).

6. Device according to one of the preceding claims, **characterised by** the fact that the cutting mechanism is provided with an abrasive disc (14) for a cutting tool.

7. Device according to one of the preceding claims, **characterised by** the fact that the cutting mechanism is provided with a cutting tool (17) and the speed of cutting is given by the rotation of the wire guide cylinders (4).

8. Device according to one of the preceding claims, **characterised by** the fact that the cutting mechanism uses as a translation member the support table (3) to urge the cutting tool against at least one wire guide cylinder (4).

9. Device according to one of the preceding claims, **characterised by** the fact that the cutting mechanism uses the principle of rolling for the formation of the grooves (11).

10. Device according to one of the claims 1 to 8, **characterised by** the fact that the cutting mechanism uses for the formation of the grooves (11) the principles of machining by laser, by liquid jet, by electroerosion or by acid engraving.

11. Device according to one of the preceding claims, **characterised by** the fact that at least one portion of the cutting mechanism comprising the cutting tool(s) (14,17) is arranged in an intermediate position between the wire guide cylinders (4) such that cutting takes place on a sector of the wire guide cylinders (4) not covered by the layer of wires (2).
